# EUROPEAN PATENT APPLICATION

(11) **EP 2 521 092 A1**
(43) Date of publication of application: **07.11.2012**
(21) Application number: 10841047.3
(22) Date of filing: 28.12.2010
(51) Int. Cl.: G06T 7/00

(54) **IMAGE RECOGNITION SYSTEM**

(30) Priority: 28.12.2009 JP 2009297906
(71) Applicant: Cyber Ai Entertainment Inc., Tokyo 158-0095 (JP)
(72) Inventor: KUTARAGI Ken, Tokyo 158-0095 (JP); USUKI Takashi, Tokyo 158-0095 (JP); YOKOTE Yasuhiko, Tokyo 1580095 (JP)
(74) Representative: Grünecker, Kinkeldey, Stockmair & Schwanhäusser
(86) International application number: PCT/JP2010/073743
(87) International publication number: WO 2011/081192

(57) **Abstract**

Disclosed is an image recognition system which comprises a database having a learning function. The image recognition system comprises: a mother database (MDB) created from a database for configuring an object; a generic object recognition section; and an object recognition section. The generic object recognition section is operable to estimate a category group using a feature value obtained from an input image. The object recognition section is operable to compare a feature value represented by feature data about each of one or more objects belonging to a category narrowed down by the generic object recognition section and extracted from the MDB, with the feature value extracted from the input image, for each of a plurality of points including a structure of the input image, to thereby identify the object.

## Description

### TECHNICAL FIELD

The present invention relates generally to an image recognition system, and more particularly to an image recognition system having a database.

### BACKGROUND ART

### [Image Recognition (Computer Vision) Technologies]

Generally, the beginning of research on image recognition can date back 40 years or more. Since then, along with progress of high-speed processing technologies for computers and machine learning technologies, researches on line-drawing interpretation (1970s), a cognitive model based on a knowledge database constructed using a manually formulated rule and/or geometric model, and a three-dimensional model representation (1980s) were promoted. In the 1990s, researches, particularly, on facial image recognition and learning-based recognition, became active.

Researches on image recognition evolved from facial image recognition into generic object recognition. In the 2000s, further enhanced computer abilities made it possible to handle an enormous amount of calculation required for statistical processing and learning processing, and thereby researches on generic object recognition were promoted. The term "generic object recognition" means a technology of causing a computer to recognize, as a generic name, an object included in an image acquired from a real-world scene. In the '80s, the formulation of rules and models was manually performed, whereas, in the 2000s where it became possible to process a great deal of data at high speed, great interest was shown in an approach based on statistical machine learning, which triggered the recent boom of generic object recognition. The generic object recognition technology makes it possible to automatically assign a keyword to an image, and classify and retrieve the image in accordance with its semantic. An ultimate goal is to realize a human's cognitive function by a computer (Non-Patent Publication 1).

The generic object recognition technology progressed by approach from an image database and introduction of a statistical probability method. A pioneering research during the progress includes a method of leaning a correlation from data created by manually assigning keywords to an image to perform object recognition (Nan-Patent Publication 2), and a method based on local feature values (Non-Patent Publication 3). Further, a research on generic object recognition based on local feature values includes the SIFT (Scale-Invariant Feature Transform) method (Non-Patent Publication 4), and the Video Google (Non-Patent Publication 5).

In 2004, so-called "Bag-of-Keypoints" or "Bag-of-Features" method was proposed. This method is intended to express an image by a histogram representing the frequency of appearance of a typical local pattern image piece, so-called "visual word". More specifically, a histogram is created for each image by extracting feature points based on the SIFT method, and vector-quantizing an SIFT feature vector based on a plurality of pre-obtained visual words. The histogram created in this manner is formed as sparse vectors, such as several hundred to several thousand-dimensional vectors. Then, image recognition process is performed by handling these vectors as a classification problem of multidimensional vectors (Non-Patent Publication 6).

### [Quasi-Real Space being created from Image and Object Model]

Enhancement in computer abilities has also provided great progress in the world of computer representation. For example, there are three-dimensional modeling and image rendering of an object, based on high-speed computing. Based on high computer abilities of hardware, recent computer gaming machines become able to readily process depiction of a three-dimensional object. In addition, along with an increase in network communication capacity, a load on a computer has almost been eliminated, even in an operation of rotatably viewing three- dimensional object model data accumulated on a server, from a client terminal. Based on progress of such image processing technologies and network communication technologies, since 2000, a quasi-real space, so-called "metaverse" and "virtual world", has finally been established.

### LIST OF PRIOR ART DOCUMENTS

### [NON-PATENT DOCUMENTS]

Non-Patent Publication 1: Keji YANAI, "The Current State and Future Directions on Generic Object Recognition", Journal of Information Processing Society of Japan, Vol. 48, No.SIG16 (CVIM19), pp. 1-24, 2007
Non-Patent Publication 2: Pinar Duygulu, Kobus Barnard, Nando de Freitas, David Forsyth, "Object Recognition as Machine Translation: Learning a lexicon for a fixed image vocabulary," European Conference on Computer Vision (ECCV), pp. 97-112, 2002
Non-Patent Publication 3: R. Fergus, P. Perona, and A. Zisserman, "Object Class Recognition by Unsupervised Scale-invariant Learning," IEEE Conf. on Computer Vision and Pattern Recognition, pp. 264-271, 2003
Non-Patent Publication 4: David G. Lowe, "Object Recognition from Local Scale-Invariant Features," Proc. IEEE International Conference on Computer Vision, pp. 1150-1157, 1999
Non-Patent Publication 5: J. Sivic and A. Zisserman, "Video google: A text retrieval approach to object matching in videos," Proc. ICCV 2003, Vol. 2, pp. 1470-1477, 2003
Non-Patent Publication 6: G. Csurka, C. Bray, C. Dance, and L. Fan, "Visual categorization with bags of keypoints," Proc. ECCV Workshop on Statistical Learning in Computer Vision, pp. 1-22, 2004

### SUMMARY OF THE INVENTION

### [PROBLEM TO BE SOLVED BY THE INVENTION]

However, the conventional image recognition technologies partially depend on texts such as characters in an image or metadata assigned to an image, and include human-assisted processing in analysis and learning. Thus, from the standpoint of AI (Artificial Intelligence), there remains a need for fundamental improvements.
Further, in the conventional image recognition technologies, leaning for creating data for use in recognition requires a large number of sample images. However, no matter how much photographs or motion pictures are collected, discrimination capability is determined by an upper limit of an amount of information of the photographs or motion pictures, which precludes improvement in accuracy of image recognition. Moreover, a photograph or motion picture generally includes various noises, defects and errors. Thus, a feature of an object portrayed in a photograph or motion picture is buried, in many cases. In this respect, conventional template matching techniques and Bag-of-Feature method have their limits.

Therefore, it is desirable to maximally increase an information amount including accuracy/resolution of original data to be compared to an original image in image recognition.

Further, the conventional quasi-real space is practically created on the assumption that it is a virtual space different from the real world from the beginning, so that it does not realize a spatiotemporal space infinitely increased in resolution.

It is therefore a purpose of the present invention to provide an image recognition system having database, capable of creating a spatiotemporal space infinitely increased in accuracy/resolution.

A spatiotemporal space sought by the inventors will be described here.
We, human beings, live in a cognitive space.
As to various human-perceptible information (photograph, motion picture, sound, etc.), even if a target object itself does not have sufficiently detailed information, the human brain performs knowledge processing based on accumulated knowledge and experiences to instantaneously complement the insufficient information, so that it becomes possible to accurately judge what the target object is.
The present invention provides a method for applying such a human's characteristic to a computer. Knowledge database of an individual human being is limited to an amount storable in his/her brain. Further, even through knowledge of the entire human race (e.g., knowledge of 7 billion people on the earth + the entire human race in the past) is much greater, it is unable to refer to it immediately and comprehensively so as to make an accurate judgment.
Such knowledge can be accumulated as a huge database on a computer system over time, and evolved by learning (AI).
Through this activity, creation of an artificial intelligence system having cognitive ability/judging ability far exceeding those of human beings can be expected in the future. Time-axis information may be incorporated in the above basic database. This makes it possible to refer to and move a four-dimensional spatiotemporal space.
The fundamental database will hereinafter be referred to as "mother database" (hereinafter abbreviated as "MDB").

When our everyday environment is carefully observed, things in a broad range of ages and in a broad range of areas have become able to be looked and learned by advanced information distribution. However, there are always the limits of information density due to resolution of an information material and a poor state of object preservation. A world sought by the inventors is "the object", "the space" and "the world", each having an information value exceeding that acquirable by human's five senses and knowledge. These are created by describing details of the real world, and are totally and essentially different from a quasi-real world such as metaverse and virtual world.

In a museum, various things are collected in the form of actual things, whereas the above system is designed to accumulate and develop them in the form of a "mother database" on an AI system capable of recognizing/re-creating them at any timing.

Even assuming that many objects will disappear in one thousand years later, they will survive in the "mother database" on the AI system. In addition to mining geological strata and performing age determination through an isotope measurement, future archaeology will be carried out by mining the mother database. In this sense, the mother database is the most important memory and heritage of the human race.

### [MEANS FOR SOLVING THE PROBLEM]

The present invention provides an image recognition system which comprising: a mother database (MDB) created from a database for configuring an object; a generic object recognition section; and an object recognition section. The image recognition system is characterized in that the generic object recognition section is operable to estimate a category group using a feature value obtained from an input image; and the object recognition section is operable to compare a feature value represented by feature data about each of one or more objects belonging to a category narrowed down by the generic object recognition section and extracted from the MDB, with the feature value extracted from the input image, for each of a plurality of points including a structure of the input image, to thereby identify the object.

Preferably, in the image recognition system of the present invention, when more detailed data about the identified object can be obtained directly from the input image or from a link destination of the input image, the MDB is subjected to at least one of evolution, update, split, integration, extension and correction, based on the obtained data.

Preferably, in the image recognition system of the present invention, in a situation where the generic object recognition section fails to identify a category, and then the object recognition section identifies the object, a feature value created from the MDB is additionally registered as category discrimination information for the generic object recognition section.

Preferably, in the image recognition system of the present invention, when a new unregistered database of an object is found, detailed database about the object is registered into the MDB, and additionally registered as category discrimination information for the generic object recognition section.

Preferably, in the image recognition system of the present invention, when the object recognition section fails to identify the object, the object is discriminated based on information other than image information obtained from the input image and/or collective intelligence, and detailed database about the object is registered into the MDB and additionally registered as category discrimination information for the generic object recognition section.

Preferably, in the image recognition system of the present invention, in a situation where the generic object recognition section and the object recognition section fail to identify the object, and the object is still unidentified even using information other than image information obtained from the input image and/or collective intelligence, the object is registered as an unidentified object, whereafter, when a new category or a new object is registered during subsequent specific object recognition for another object, the unidentified object is re-examined.

### [EFFECT OF THE INVENTION]

The image recognition system of the present invention has the following advantageous effects.
(1) It becomes possible to achieve image recognition capable of identifying an object without relying on characters, metadata, etc., in an image.
(2) An object to be recognized may be a wide variety of objects including an object having design data such as CAD data, so that a user can obtain various information from detailed data about an object to be recognized by the image recognition system of the present invention, on the basis of image or motion picture in hand.
(3) The image recognition system of the present invention has a database capable of continuously evolving through autonomous registration/updating of detailed data of each object based on recursive leaning, and creating a spatiotemporal space having infinitely high accuracy/resolution, so that it becomes possible to perform image recognition for an enormous number of and a large variety of objects.

### BRIEF DESCRIPTION OF THE DRAWINGS

FIG. 1 is an explanatory diagram illustrating a system configuration of an image recognition system according to one embodiment of the present invention.
FIG. 2 is an explanatory diagram illustrating functional blocks of a server and an MDB in the image recognition system according to the embodiment.
FIG. 3 is an explanatory diagram illustrating functional blocks of a terminal device in the image recognition system according to the embodiment.
FIG. 4 is an explanatory diagram illustrating a flow of image recognition process in the image recognition system according to the embodiment.
FIG. 5 is an explanatory diagram illustrating a flow of another image recognition process in the image recognition system according to the embodiment.
FIG. 6 is an explanatory diagram illustrating a concept of processing in the image recognition system according to the embodiment.
FIG. 7 is an explanatory diagram illustrating a concept of processing in the image recognition system according to the embodiment.
FIG. 8 is an explanatory diagram illustrating a specific object recognition processing in the image recognition system according to the embodiment.
FIG. 9 is an explanatory diagram illustrating the specific object recognition processing in the image recognition system according to the embodiment.
FIG. 10 is an explanatory diagram illustrating the specific object recognition processing in the image recognition system according to the embodiment.
FIG. 11 is an explanatory diagram illustrating a concept of processing in the image recognition system according to the embodiment.

### DESCRIPTION OF EMBODIMENTS

The present invention will now be described in detail based on an image recognition system according to one embodiment thereof.

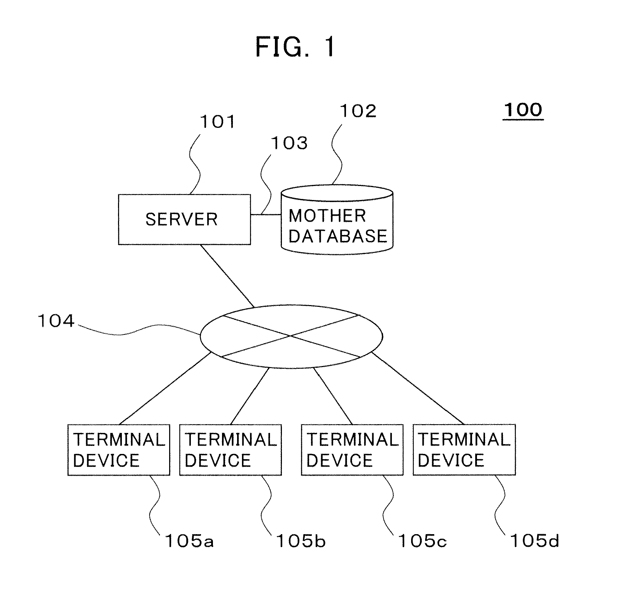

FIG. 1 illustrates the image recognition system according to this embodiment. The image recognition system 100 comprises a server 101, an MDB 102 and a plurality of terminal devices 105a to 105d. The server 101 and the MDB 102 are interconnected via a connection 103, and the server 101 and the terminal device 105 are interconnected via a network 104 such as the Internet.

In this embodiment, the server is a computer system for providing some sort of service in response to a request from a client, and means a group of computers which are formed as a server system by combining a plurality of servers, or formed by combining a plurality of the server systems. The server is adapted to be driven by a plurality of software programs. Thus, as used in this specification, a meaning of the server is set out as above.

As the most fundamental configuration, a computer as hardware is an electronic computer comprising an arithmetic-logic unit, a control unit, a storage device and an input/output device, which are connected to each other via a command bus and a data bus. The arithmetic-logic unit is operable, based on information (data bits) input from the input/output device through an input/output interface, to perform an arithmetic operation, a logical operation, a comparison operation, a shift operation, etc. Resulting data is stored in the storage device according to need, and then output from the input/output device. The series of processing is controlled by a software program stored in the storage device. Each server machine in the present invention is also hardware at least having the above fundamental functions as a computer, and controlled by an operating system, a device driver, and a group of programs such as application software.

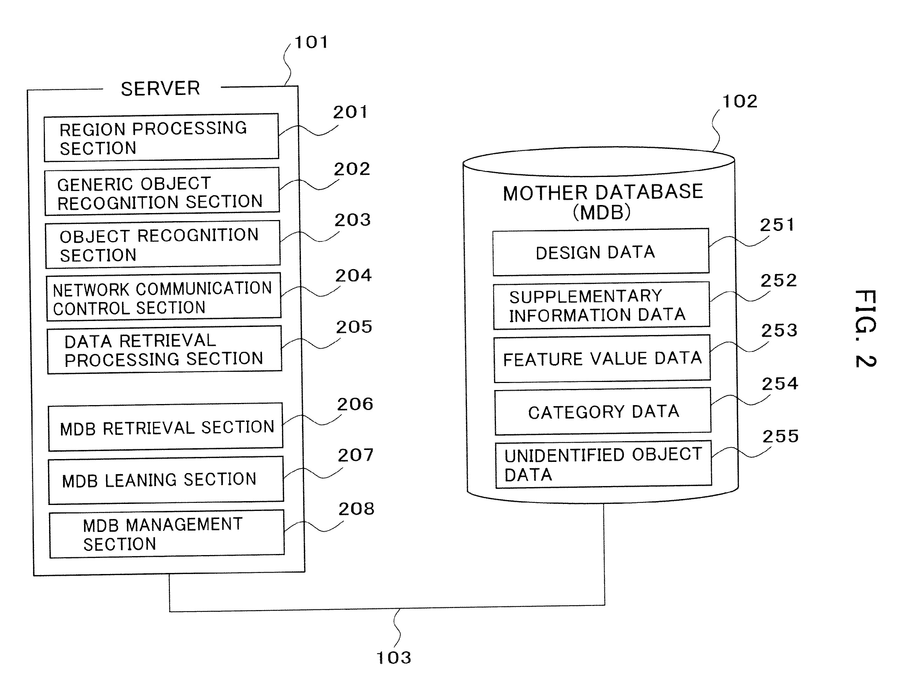

FIG. 2 illustrates functional blocks of the server 101 and the MDB 102 in the image recognition system according to this embodiment. The server 101 comprises, as software functional blocks: a region processing section 201; a generic object recognition section 202; an object recognition section 203, a design data reconfiguration section 204, a structural data checking section 205, an MDB retrieval section 206, an MDB leaning section 207, and an MDB management section 208. Although the functional blocks of the server 101 are not necessarily limited to them, respective typical functions of them will be briefly described.

The region processing section 201 is operable to perform region segmentation in an image, clipping of a partial image, etc. The generic object recognition section 202 is operable to recognize a generic name (category) of an object included in an image. The object recognition section 203 is operable to perform cross-check with information registered in the MDB to identify an object. The network communication control section 204 is operable to perform image input/output processing, control of information communication with the terminal device, etc. The data retrieval processing section 205 is operable to collect information from a link destination, and perform inquiry about collective intelligence, collection and retrieval of collective intelligence, etc. The MDB retrieval section 206 is operable to retrieve tag data such as an object name, etc., from the MDB. The MDB leaning section 207 is operable to perform addition of new design data, addition of detailed information, registration of temporal information, registration/updating/addition of supplementary information, etc. The MDB management section 208 is operable to perform extraction of a feature point and a feature value from aftermentioned design data 251, registration of the extracted feature point and value into aftermentioned category data 254, extraction of category information from the supplementary information, registration of the extracted category information into aftermentioned category data 254, extension/split/updating/integration/correction of a category-based classification in the aftermentioned category data 254, registration of a new category, etc.

The MDB 102 comprises design data 251, supplementary information data 252, feature value data 253, category data 254 and unidentified object data 255. Although the functional blocks of the MDB 102 are not necessarily limited to them, respective typical functions of them will be briefly described.

The design data 251 is adapted to hold fundamental information necessary for configuring or manufacturing an object, such as a structure, shape and dimensions of the object, information about connection between components, a layout drawing, a movable portion, a movable range, weight and rigidity, created from database for configuring or manufacturing the object.
The supplementary information data 252 is adapted to hold all additional information about an object, such as an object name, a manufacturer, a part number, date, a raw material, a composition, and machining/treatment information.
The feature value data 253 is adapted to hold information about a feature point and a feature value of each object, created based on the design data 251.
The category data 254 is adapted to hold information for use in classifying an object by category in the generic object recognition section.
The unidentified object data 255 is adapted to store therein information about an object which fails to be identified through the object recognition. When the object can be identified through the object recognition as a result of progress of leaning in the MDB, it is removed from the unidentified object data 255.

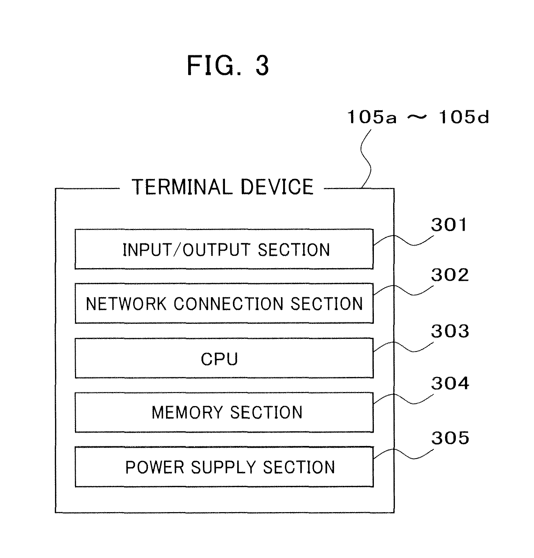

FIG. 3 illustrates the terminal device in the image recognition system according to this embodiment. Each of the terminal devices 105a to 105d is a client terminal device widely used by a user, and includes a computer, a personal digital assistance (PDA) and a mobile phone. This means that FIG. 1 illustrates a state in which various types of a large number of electronic information devices, such as the terminal devices 105a to 105d, are connected to a network such as the Internet. In the following description, the term "terminal device 105" means any one of the terminal devices 105a to 105d connected to the network. Obviously, it is not necessary that all of the terminal devices 105a to 105d are the same type. It is only necessary that they have equivalent functions (or practicable minimum functions). Typical function blocks of the terminal device 105 will be described here.

Each of the terminal devices 105a to 105d comprises an input/output section 301, a network connection section 302, a CPU 303, a memory section 304, and a power supply section 305. For example, the input/output section 301 may be composed of an input device, such as a keyboard, a mouse, a pen, a jog dial, a joy stick, a touch panel (including a type incorporated in a display), and/or a voice recognition microphone, and an output device, such as a display, a speaker and/or a vibrator. The network connection section 302 is an interface for connection to a network such as the Internet. It may be a wired type or may be a wireless type.

The CPU 303 is a central processing unit. The memory section 304 is a storage device such as a hard disk or a memory, and the power supply section 305 is a battery or the like.

Additionally, for example, a sensor for detecting inclination and acceleration and a GPS receiver may be mounted according to need.

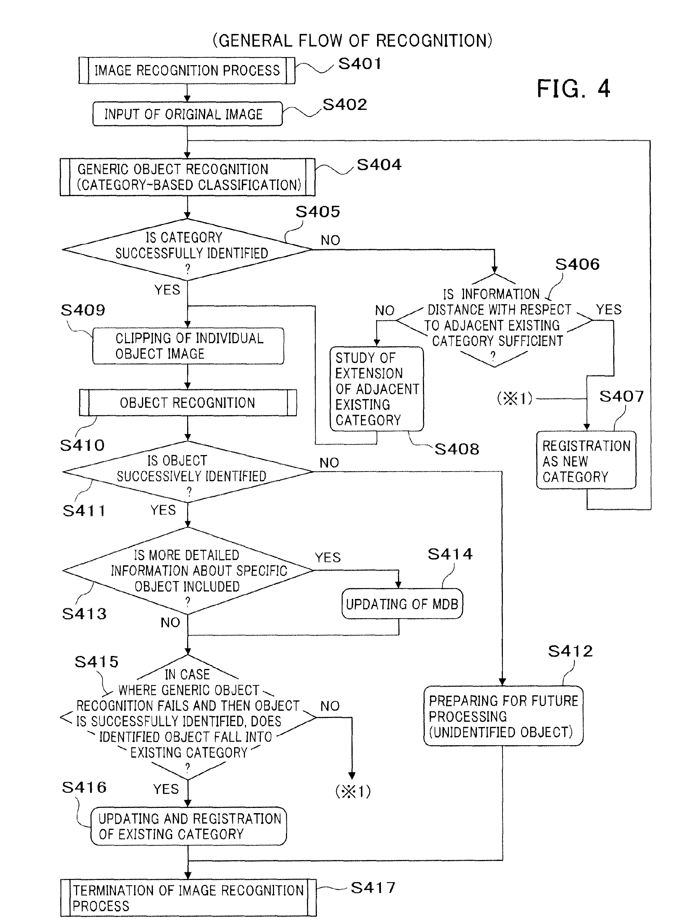

In accordance with FIG. 4, a general flow of image recognition process in the image recognition function system according to this embodiment will be described below.

### [Generic Object Recognition]

The image recognition process (S401) begins with an input of an original image in the terminal device 105 (S402). The original image may be a two-dimensional image or may be a three-dimensional image. In the operation of inputting the original image, there are a first case where a region of interest including an object of interest in the original image is designated through the use of a device (not illustrated) such as a pointing device, and a second case where the entire original image is input as a target object without designation of a point of interest. Then, in S404, a generic object recognition processing is performed. For example, the BOF (Bag-Of-Features) method may be used in the generic object recognition processing. In this generic object recognition processing, recognition of a category of a detected object (generic name of the object) is performed and then completed. However, in the case where a point of interest is designated, the process is branched depending on whether or not the category is successfully recognized, and the determination is performed in S405. When the recognition of the category fails, the process advances to S406 in which a determination on handling of existing categories is made (S407). However, when the category of the object is successfully recognized irrespective of the presence or absence of the designation of a point of interest, the process advances to S409 to prepare for an object recognition processing.

### [Object Recognition]

When the process advances to the object recognition processing according to the determination in S405, a processing of clipping an individual object image is performed in S409. Then, the clipping individual object image is subjected to the object recognition processing (S410). In the object recognition processing, it is tried to identify the object using an evaluation function for calculating a coincidence degree based on the feature value data 253 extracted from the design data 251 registered in the MDB 102.

### [Learning Processing (1)]

On the other hand, when the determination in S405 is made that the generic object recognition fails, the process advances to S406 in which, based on an information distance between a feature value of the object of interest and a feature value of each object belonging to existing categories held by the MDB 102, a determination for selecting one of registration of a new category including the object of interest (S407) and study of an extension of an existing category adjacent to the object of interest (S408) is performed. When a new category is registered (S407), the process returns to S404. When an existing category is extended (S408), the process advances to S409.

### [Learning Processing (2) after Object Recognition]

In S411, it is determined whether a specific object is successively identified. When the specific object is successively identified, the process advances to S413 in which it is determined whether information more detailed than detailed data about the object registered in the MDB 102 is included in the individual object image clipped in S409. If the determination in S413 is made as YES, the process advances to S414 in which detailed data about the object registered in the MDB 102 is updated by the MDB leaning section 207 to allow the MDB 102 to have the more detailed information. On the other hand, when the determination in S413 is made as NO, the process advances to S415 in which the following determination is performed.

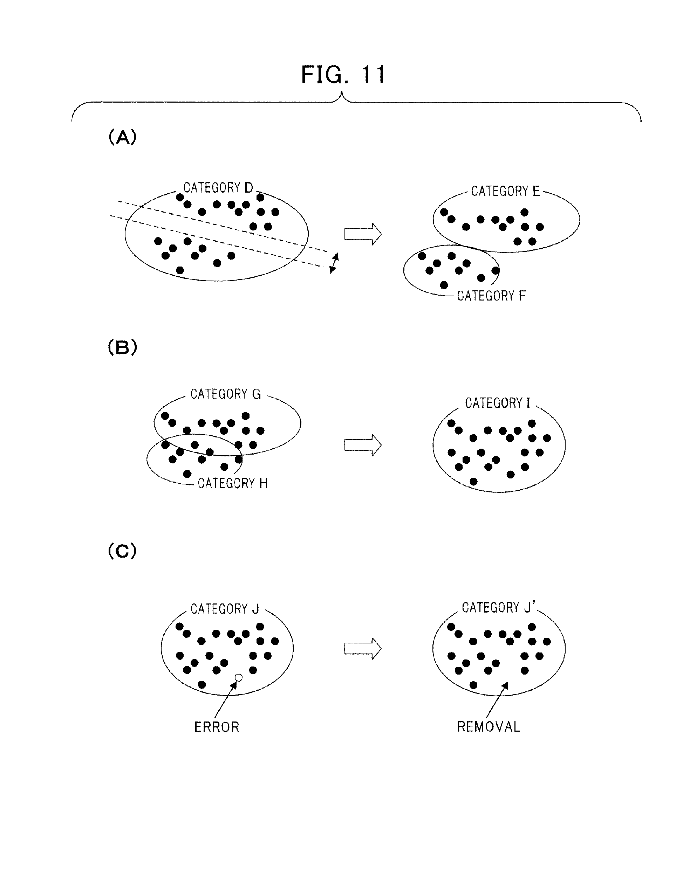

After the determination in S405 is made that the generic object recognition fails, according to the determination in S406, the process advances to S408, S409 and S410, and when the specific object is successively recognized (YES in S411), the determination in S415 is made. When the determination in S415 is made that the identified object falls into an existing category, a definition of the existing category registered in the MDB 102 is extended. Then, when an information distance between objects in the category spreads due to the extension, the existing category is divided into two categories (FIG. 11(A)). On the other hand, when an information distance with respect to an adjacent category becomes equal to or less than an information distance between objects in the category, the two categories are integrated (FIG. 11(B)). Further, when an inconsistency in existing object information is found during registration of the identified object, it is corrected (FIG. 11(C)). Subsequently, the category data 254 is updated (S416). On the other hand, when the determination in S415 is made that the identified object does not fall into an existing category, the process returns to S407 in which it is registered as a new category.

When the determination in S411 is made that the recognition of the specific object fails, this object is registered in the MDB 102 as an "unidentified object" to prepare for future processing. Then, the recognition process is terminated (S417). When the existing category is extended and updated in S416, the recognition process is also terminated (S417).

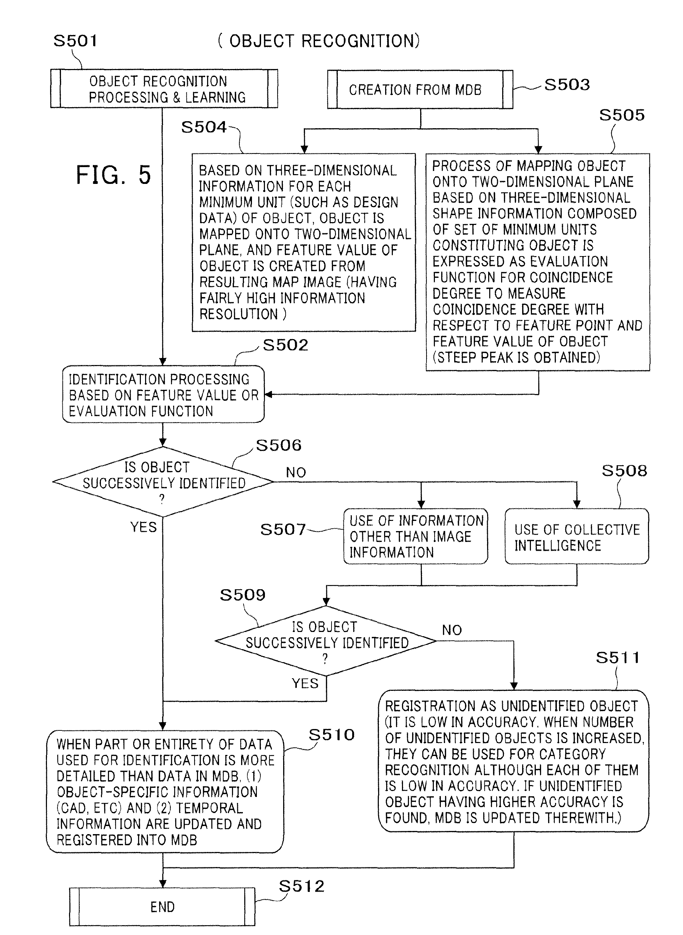

FIG. 5 is a flowchart illustrating another example of the object recognition processing and a part of the learning processing in FIG. 4. Details thereof will be described below.

In S501, a specific object recognition processing is started. Data to be input in S501 may include an image of a single object, and design data in the same layer. It may further include design data linked to the image, and design data itself (the object may be an entirety of a product or may be a component thereof).
Then, in S502, a feature point and a feature value in the original image are extracted, and compared with feature value data created from the MDB. The creation of the feature value data from the MDB and the comparison may be performed in the following two ways.

In the first way, based on three-dimensional information for each minimum unit (represented by design data) constituting an object, the object is mapped onto a two-dimensional plane from every angle, and a feature value for use in identifying the object is created from the mapped image. In the comparison, a feature value is extracted from the input image on the basis of the created feature value, and they are compared with each other by point or frequency of appearance (S504). For example, the feature value here may be created by a contour extraction method or a SURF method.

In the second way, a process of mapping an object onto a two-dimensional plane based on three-dimensional shape information composed of a set of minimum units (such as design data) constituting an object, while changing a projection angle, an magnification percentage, etc., is expressed as an evaluation function, and a difference with respect to a feature point and a feature value of an object is determined as a coincidence degree (the tuning method) (S505).

In view of the fact that the identification processing (S502) based on a feature value or an evaluation function has heretofore been performed while collecting a large number of sample images at any rate, the technique of creating feature value data from the MDB as described in S504 and S505 (S503) has a more advantageous effect than the conventional technique, in terms of an enhancement in accuracy of the identification.

Then, in S506, it is determined whether the object is successively identified. If it is determined that the object is successively identified, the process advances to S510 in which it is determined whether the data used for the identification is more detailed than data in the MDB, or is the latest data, and, based on a result of the determination, information (design data, etc) specific to the object and temporal information (information about a type or version of the object) are registered into the MDB (or the MDB is updated therewith), and the process exits the object recognition processing. In other words, the registration of the information and the updating of the MDB serve as a database leaning processing.

On the other hand, when the determination in S506 is made that the identification of the object fails, information (characters and/or logo in the image) other than image information is extracted, and the object identification processing is performed again. For example, if a logo indicative of a manufacturer is spotted on an object in an image, the identification is likely to be easily performed even if most of the object is offset out of a frame. Then, the process advances to S509, it is re-determined whether the object is successfully identified. When the object is successfully identified (YES in S509), the process advances to S510 in which it is determined whether the data used for the identification is more detailed than data in the MDB, or is the latest data, and, based on a result of the determination, information (design data, etc) specific to the object and temporal information (information about a type or version of the object) are registered into the MDB (or the MDB is updated therewith), and the process exits the object recognition processing.

On the other hand, when the identification of the object fails (NO in S509), the object is registered into the MDB as an unidentified object, to prepare for future updating and creation of a new category (S511). Then, the object recognition processing is completed.

In parallel with or in place of the identification processing using information other than image information in S507, collective intelligence may be used to identify the object (S508). For example, the processing in S508 may be implemented by retrieving encyclopedias on the network or by performing automatic posting on a Q&A message board. In order to allow the system itself to retrieve encyclopedias on the network, a retrieval query is prepared using the category obtained by the generic object recognition and the feature value created from the MDB, to perform the retrieval. Then, a new feature value is extracted from contents of returned information, and it is re-tried to identify the object. On the other hand, in the automatic posting on a Q&A message board, the category obtained by the generic object recognition and the original image are uploaded onto the message board. In this case, a prepared fixed phrase is subjected to automation edit to form a query such as "Please let me know a type of the ---" or "Please let me know a website publishing design information about the ---", and the query is posted. Then, advices such as "it is xx-xxxx" or "design data about theis available from http://www.aaabbb.com/cad/data.dxf" are returned from other users (human beings). The system is operable to analyze and evaluate the advices, and access the designated URL to try downloading of design data of the object, etc. If the object is successfully identified based on the newly obtained design data, the obtained design data is added to the MDB, or the MDB is updated therewith.

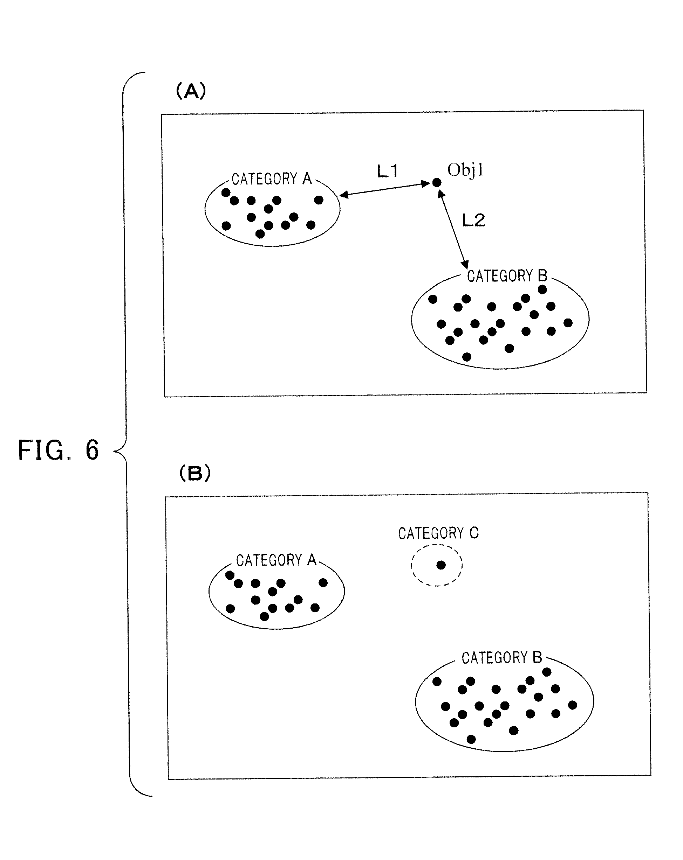

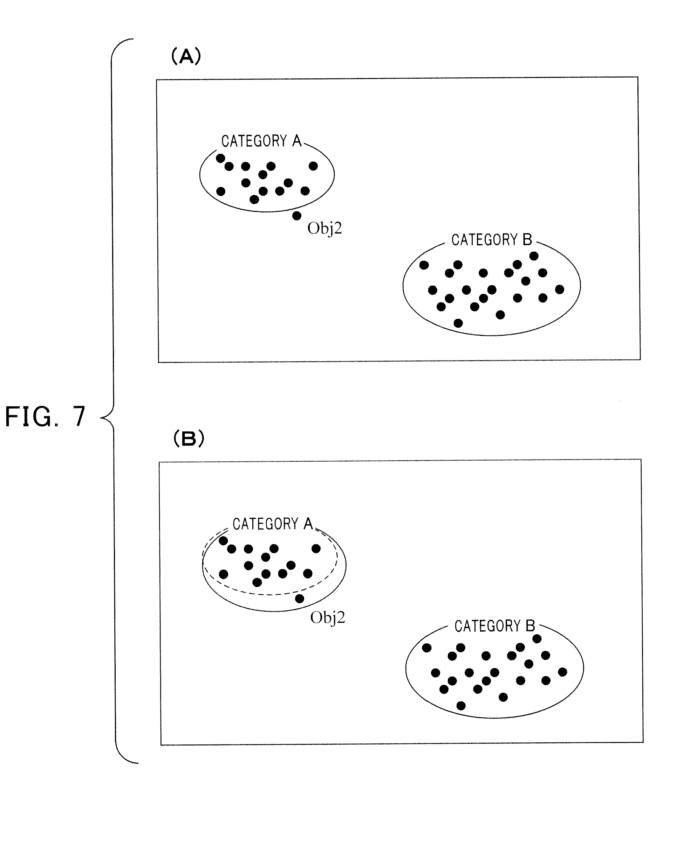

FIGS. 6 and 7 are conceptual diagrams specifically illustrating examples of processing in S406, S407 and S408 in FIG. 4. FIG. 6(A) illustrates a situation where the MDB 102 has an existing category A and an existing category B which have already been registered therein, and it is being tried to determine into which of categories an object Obj1 subjected to the determination in S405 made that the generic object recognition fails is classified. In this case, an information distance between a feature value of the object Obj1 and a feature value of each of the category A and the category B is calculated (L1, L2). Then, when each of the distances L1, L2 is determined to be sufficient long or far, it is determined that the object Obj1 should belong to a new category. Thus, a new category C is created, and the object Obj1 is registered thereinto (FIG. 6(B).

FIG. 7(A) illustrates a situation where the MDB 102 has an existing category A and an existing category B which have already been registered therein, and an object Obj2 subjected to the determination in S405 made that the generic object recognition fails, and the object Obj2 is located in adjacent relation to the category A in view of respective feature values thereof. In this case, an information distance between the category A and the object Obj1 is sufficiently short or close (whereas an information distance between the category B and the object Obj1 is sufficiently long or far). In this situation, if a new category C is created for the object Obj 2, another object is likely to be included in both the category A and the category C, which is undesirable in view of the category-based classification. Therefore, in the situation as illustrated in FIG. 7(A), a definition of the category A is minimally extended, and updated to include the object Obj 2 (FIG. 7(B)).
As algorithms for calculating information distance, it is possible to utilize various algorithms in code theory (Hamming, Fisher, etc.), and any other suitable distance calculation algorithm based on an information theory.

It is to be understood that various formats may be used as a format of design data to be registered in the MDB 102 as detailed data about an object. For example, it may include the DXF format, the DWG format and the 3DS format. A technique of calculating a feature value from the design data, and cross-checking the calculated feature value and a feature value calculated from the original image in the same dimension to perform recognition is as mentioned above.

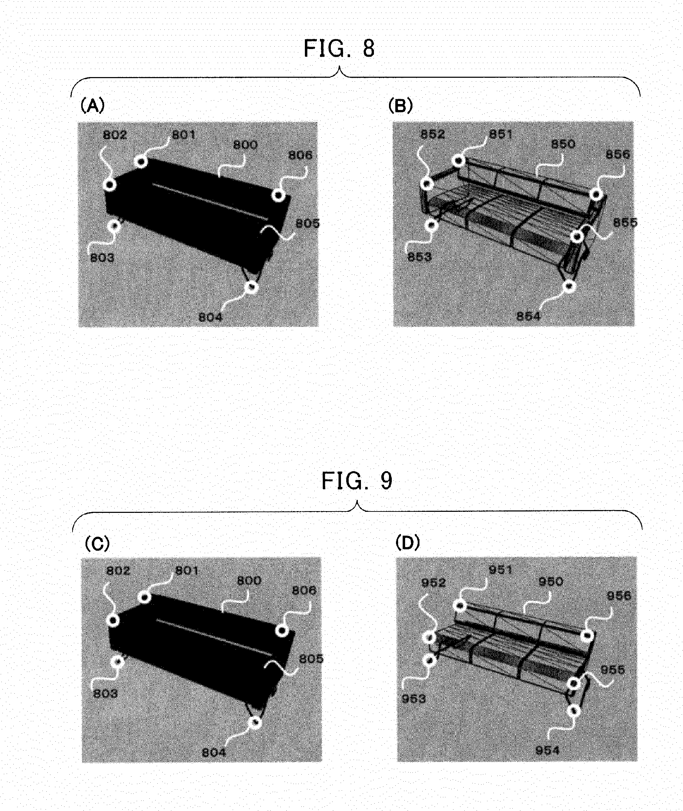

Based on FIGS. 8 and 9, an example will be described in which an object recognition processing is performed by comparing a feature value of a couch in an original image, with a feature value of CAD data of a couch registered in the MDB in the image recognition system according to this embodiment. FIG. 8 illustrates a situation where a result of the object recognition is coincidence, and FIG. 9 illustrates a situation where the result of the object recognition is non-coincidence.

### [Example for Coincidence]

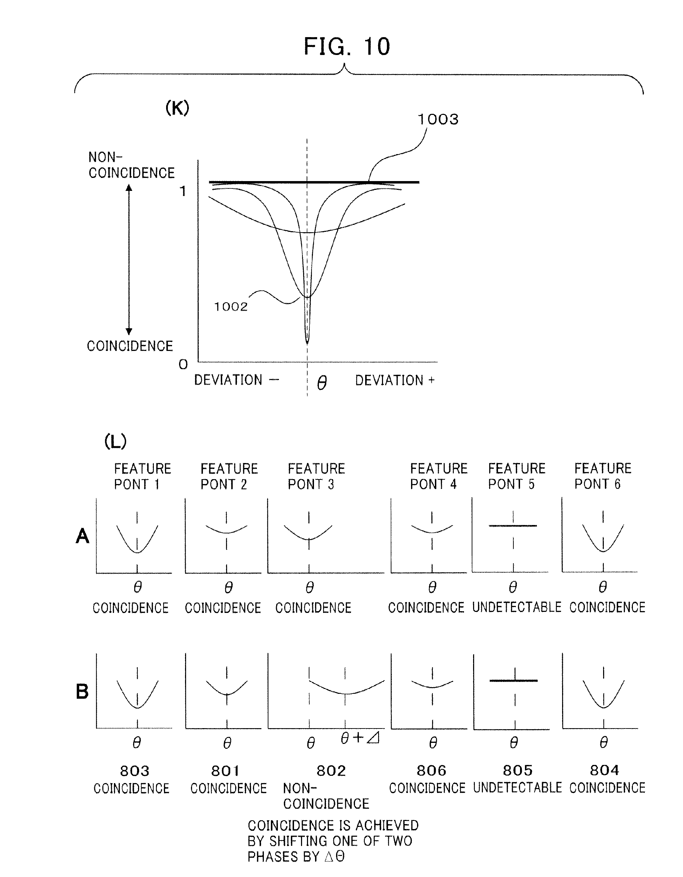

In FIG. 8(A), the reference numeral 800 indicates the original image of the couch. In this example, five feature points are extracted. The reference numeral 801 indicates a feature point at a left (in FIG. 8(A)) corner of a backrest. The reference numeral 802 indicates a feature point at a front (in FIG. 8(A)) corner of a left armrest. The reference numeral 803 indicates a feature point at a left front leg. The reference numeral 804 indicates a feature point at a right front leg. The reference numeral 806 indicates a feature point at a right corner of the backrest. The reference numeral 805 is assigned for explanation (not marked by a circle), although the indicated point is not extracted as a feature point.
In FIG. 8(B), the reference numeral 850 indicates an image plotted from a comparative CAD data of a couch. In this example, six feature points are extracted. The reference numeral 851 indicates a feature point at a corner of a left (in FIG. 8(B)) backrest. The reference numeral 852 indicates a feature point at a front corner of a left armrest. The reference numeral 853 indicates a feature point at a left front leg. The reference numeral 854 indicates a feature point at a right front leg. The reference numeral 855 indicates a feature point at a front corner of a right armrest. The reference numeral 856 indicates a feature point at a corner of a right (in FIG. 8(B)) backrest.
A comparison is performed: between the feature points 801, 851; between the feature points 802, 852; between the feature points 803, 853; between the feature points 804, 854; between the feature points 805, 855; and between the feature points 806, 856, by using an aftermentioned method (FIG. 10). Although the feature point 805 is not detected, the coach 800 can be identified as the coach 850, because the two images are coincident at the remaining five points. In other words, if the two images are coincident at all of or a certain percentage or more of the feature points, it can be determined that the object is successfully identified.
Even in a situation where a part of an object is hidden (function-based detection cannot be performed), if the two images are adequately coincident at the remaining feature points, it can be determined that the object is successfully identified.

### [Example for Non-Coincidence]

FIG. 9(C) illustrates the same coach 800 as that illustrated in FIG. 8(A).
In FIG. 9(D), the reference numeral 950 indicates an image plotted from a comparative CAD data of another couch. In this example, six feature points are extracted. The reference numeral 951 indicates a feature point at a corner of a left (in FIG. 9(D)) backrest. The reference numeral 952 indicates a feature point at a front corner of a left armrest. The reference numeral 953 indicates a feature point at a left front leg. The reference numeral 954 indicates a feature point at a right front leg. The reference numeral 955 indicates a feature point at a front corner of a right armrest. The reference numeral 956 indicates a feature point at a corner of a right (in FIG. 9(D)) backrest.
A comparison is performed: between the feature points 801, 951; between the feature points 802, 952; between the feature points 803, 953; between the feature points 804, 954; between the feature points 805, 955; and between the feature points 806, 956. According to the aftermentioned method (FIG. 10), the two images are not coincident between the feature points 802, 952, so that the coach 800 and the coach 850 are determined to be different objects.

### [Example of Comparative Determination Method]

In FIG. 10(K), the horizontal axis represents a phase (which encompasses angle, distance and color), and the vertical axis represents a coincidence degree between an original image and a comparing CAD image. When the two images are compared at corresponding feature points while deviating the comparing CAD image, the coincidence degree with the original image has a value in the range of 0 and 1. When the two images are coincident with each other, the coincidence degree becomes 0, whereas, when the two images are not coincident with each other, the coincidence degree becomes 1. Between two CAD images, a comparing CAD image can be fully coincident with an original CAD image at one phase. However, an original image includes noise, and thereby perfect coincidence never occurs. Therefore, the coincidence degree is plotted as a line 1002 along with a change in phase of the comparing CAD image. If the two images are not coincident at all, the coincidence degree is plotted as a straight line 1003.
FIG. 10(L) illustrates curves in the example for coincidence in FIG. 8 and curves in the example for non-coincidence in FIG. 9. In FIG. 10(L)A, a feature point 1, a feature point 2, a feature point 3, a feature point 4, a feature point 5 and a feature point 6 correspond, respectively, to the feature point 803, the feature point 801, the feature point 802, the feature point 806, the feature point 805 and the feature point 804. In FIG. 10(L)A, the coincidence degree has a minimum value at a certain same phase value, at any feature point other than the feature point 805 which is not extracted. Thus, it is determined that the original image and the comparing CAD image are coincident with each other. On the other hand, in FIG. 10(L)B, as a result of comparison performed in the same manner, at the feature point 3, the coincidence degree has a minimum value at a phase value of the comparing CAD image different from that at the remaining feature points. Thus, it is determined that the original image and the comparative CAD image are not coincident with each other.

### EXPLANATION OF CODES

100: image recognition system
101: server
102: mother database (MDB)
103: connection
104: network (or Internet)
105a to 105d: terminal device

## Claims

1. An image recognition system comprising: a mother database (MDB) created from a database for configuring an object; a generic object recognition section; and an object recognition section, wherein:
the generic object recognition section is operable to estimate a category group using a feature value obtained from an input image; and
the object recognition section is operable to compare a feature value represented by feature data about each of one or more objects belonging to a category narrowed down by the generic object recognition section and extracted from the MDB, with the feature value extracted from the input image, for each of a plurality of points including a structure of the input image, to thereby identify the object.

2. The image recognition system as defined in claim 1, wherein, when more detailed data about the identified object can be obtained directly from the input image or from a link destination of the input image, the MDB is subjected to at least one of evolution, update, split, integration, extension and correction, based on the obtained data.

3. The image recognition system as defined in claim 1 or 2, wherein, in a situation where the generic object recognition section fails to identify a category, and then the object recognition section identifies the object, a feature value created from the MDB is additionally registered as category discrimination information for the generic object recognition section.

4. The image recognition system as defined in any one of claims 1 to 3, wherein, when a new unregistered database of an object is found, detailed database about the object is registered into the MDB, and additionally registered as category discrimination information for the generic object recognition section.

5. The image recognition system as defined in any one of claims 1 to 4, wherein, when the object recognition section fails to identify the object, the object is discriminated based on information other than image information obtained from the input image and/or collective intelligence, and detailed database about the object is registered into the MDB and additionally registered as category discrimination information for the generic object recognition section.

6. The image recognition system as defined in any one of claims 1 to 5, wherein, in a situation where the generic object recognition section and the object recognition section fail to identify the object, and the object is still unidentified even using information other than image information obtained from the input image and/or collective intelligence, the object is registered as an unidentified object, whereafter, when a new category or a new object is registered during subsequent object recognition for another object, the unidentified object is re-examined.
